# EUROPÄISCHE PATENTSCHRIFT

(11) **EP 2 648 959 B1**
(45) Veröffentlichungstag und Bekanntmachung des Hinweises auf die Patenterteilung: **06.08.2014**
(21) Anmeldenummer: 10794941.4
(22) Anmeldetag: 08.12.2010
(51) Int. Cl.: B61D 23/02, B60R 3/02

(54) **EIN-/AUSSTIEGSAUSSCHUB MIT BREMSMITTELN**
EMBARKING/DISEMBARKING EXTENSION HAVING BRAKING MEANS
ÉLÉMENT TÉLÉSCOPIQUE D'ENTRÉE ET SORTIE ÉQUIPÉ DE MOYENS DE FREINAGE

(43) Veröffentlichungstag der Anmeldung: 16.10.2013
(73) Patentinhaber: Gebr. Bode GmbH & Co. KG, 34123 Kassel (DE)
(72) Erfinder: RASEKHI, Abbas, 34128 Kassel (DE)
(74) Vertreter: Bauer Vorberg Kayser Patentanwälte
(86) Internationale Anmeldenummer: PCT/EP2010/069190
(87) Internationale Veröffentlichungsnummer: WO 2012/076048

(56) Entgegenhaltungen:
- EP-A1- 1 386 818

## Beschreibung

Die Erfindung betrifft eine Ein-/Ausstiegsvorrichtung für ein Fahrzeug insbesondere für ein Personenbeförderungsfahrzeug, wie es im öffentlichen Personenverkehr verwendet wird. Diese Ein-/Austiegsvorrichtungen weisen regelmäßig einen zwischen einer eingefahrenen und ausgefahrenen Stellung hin- und herbewegliches Ausschub, im Falle einer linearen Verschiebung einen sogenannten Schiebetritt, auf, der beispielsweise in einer ausgefahrenen Stellung einen betretbaren oder befahrbaren Bereich definiert. Diese Schiebetritte weisen regelmäßig seitliche Führungen des Ausschubs zur Befestigung an einem Wagenkasten oder Fahrzeugrahmen des Fahrzeugs auf.

Solch ein Schiebetritt ist aus der EP 1 386 818 A1 bekannt.

Ausschübe werden verwendet, um Personen das Ein- und Aussteigen in ein Personenbeförderungsfahrzeug dadurch zu erleichtern, dass sie den Spalt zwischen dem Fahrzeug und der Ein- beziehungsweise Ausstiegsplattformkante, wie Bahnsteigkante, überbrücken. Es ergeben sich jedoch Probleme, wenn die horizontale Spaltbreite schwankt, sich dort Hindernisse befinden und Kräfte auf den Ausschub entgegen dessen Ausfahrrichtung einwirken. In der ausgefahrenen Stellung stellt sich das Problem, das äußere Kräfte eine Verstellung des Ausschubs bewirken. Zwar kann das den Ausschub antriebende Getriebe selbsthemmend ausgestaltet sein, eine solche Krafteinwirkung kann aber leicht zur Zerstörung des Getriebes führen. Insbesondere sind die wegen Ihres geringen Bauvolumens und leisen Betriebs bevorzugten Riemenantriebe besonders anfällig, da eine derartige Beanspruchung zu einer Längendehnung des Riemens führen kann. Ferner ist ein Abbremsen des Ausschubs bei dessen Bewegung wünschenswert, da aufgrund der gewünscht hohen Aus- und Einfahrgeschwindigkeit, das Auftreffen des Ausschubs auf ein Hindernis zu Schäden, insbesondere Personenschäden, führen kann. Vor dem Hintergrund dieser Nachteile haben sich die Erfinder der vorliegenden Erfindung die Aufgabe gestellt, eine Ein-/Ausstiegsvorrichtung mit einer konstruktiv einfachen mechanischen Bremseinrichtung bereitzustellen .

Diese Aufgabe wird durch eine Ein-/Ausstiegsvorrichtung des Anspruchs 1 sowie durch ein Personenbeförderungsfahrzeug des nebengeordneten Anspruchs gelöst. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft eine Ein-/Ausstiegsvorrichtung für ein Fahrzeug, insbesondere für ein Personenbeförderungsfahrzeug, beispielsweise ein Fahrzeug des öffentlichen Nahverkehrs. Die erfindungsgemäße Ein- /Ausstiegsvorrichtung weist ein zwischen einer eingefahrenen und ausgefahrenen Stellung hin- und herbeweglichen Ausschub, beispielsweise einen sogenannten Schiebetritt auf. Beispielsweise sind seitliche Führungen des Ausschubs an dessen Schmalseiten, zur Befestigung an einem Fahrzeug, beispielsweise dem Wagenkasten, vorgesehen. Beispielsweise sind Rollen an dem Ausschub montiert, die in wagenkastenseitigen Schienen geführt sind. Ferner kann ein Rahmen oder Gehäuse vorgesehen, sein, mittels dem die Führungen am Fahrzeug befestigt sind. Gattungsgemäße Schiebetritte sind beispielsweise aus der EP 1923267 A1 bekannt. Die Erfindung ist hinsichtlich der Ausgestaltung des Schiebetritts, der Gestaltung des zugehörigen betretbaren Bereichs sowie der Ausgestaltung der Führung nicht eingeschränkt.

Erfindungsgemäß ist vorgesehen, dass der Ausschub von einem Mitnehmer mitgenommen wird. Zum Antrieb des Mitnehmers sind ferner ein Motor und ein zugehöriges Getriebe vorgesehen. Die Erfindung ist hinsichtlich des Motors und des Getriebes nicht eingeschränkt. Bevorzugt handelt es sich um einen Elektromotor, einen hydraulischen oder pneumatischen Motor.

Erfindungsgemäß ist ferner ein Bremsmittel vorgesehen, um den Ausschub wenigstens zu bremsen, wobei "wenigstens" so zu verstehen ist, dass auch ein Blockieren des Ausschubs erfindungsgemäß vorgesehen sein kann. Die erfindungsgemäße Vorrichtung zeichnet sich dadurch aus, dass der Ausschub relativ beweglich an dem Mitnehmer gelagert ist, und durch die Relativbewegung zwischen Ausschub und Mitnehmer die Bremsmittel wenigstens aus ihrer Lösestellung in ihre Bremsstellung bewegt werden. Dadurch wird der Ausschub in seiner Bewegung gebremst bzw. in seiner Stellung weitgehend festgelegt. Eine Krafteinwirkung, insbesondere mit einer Komponente parallel zur Bewegungsrichtung des Ausschubs, verhindert zumindest weitgehend eine Verstellung des Ausschubs in dessen Stellung und dann eine übermäßige Beanspruchung des Motors und des Getriebes. Die Antriebskomponenten werden somit geschont. Bei einer Ausfahrbewegung wird so der Ausschub gebremst und verhindert Personenschäden oder eine Beschädigung des Ausschubs.

Um ein zuverlässiges Lösen des Bremsmittels zu gewährleisten, ist gemäß einer bevorzugten Ausgestaltung vorgesehen, dass die Bremsmittel durch eine Rückstellkraft in ihre Lösestellung bewegt werden.

Gemäß einer weiteren bevorzugten Ausgestaltung ist vorgesehen, dass die Relativbewegung von Ausschub und Mitnehmer so ausgestaltet ist, dass eine mittlere Lösestellung und zwei Bremsstellungen, die den zwei Bewegungsrichtungen der Relativbewegung zwischen Ausschub und Mitnehmer entsprechen, vorgesehen sind. Damit wird für beide Krafteinwirkungsrichtungen ein Bremsen des Ausschubs bereitgestellt.

Um Bauraum für den Antrieb einzusparen und das Betriebsgeräusch zu senken, handelt es sich bevorzugt bei dem Getriebe wenigstens teilweise um einen formschlüssigen oder kraftschlüssigen Zugmitteltrieb. Bevorzugt handelt es sich dabei um einen formschlüssigen Zugmitteltrieb, wie einen Zahnriemenantrieb.

Dabei ist bevorzugt der Mitnehmer an einem Riemen des Zugmitteltriebs befestigt.

Gemäß einer bevorzugten Ausgestaltung umfassen die Bremsmittel eine verschwenkbare Nockenscheibe mit einem oder mehreren Nocken, die mit dem Mitnehmer zusammenwirkt, um eine Bremskraft zu erzeugen. Beispielsweise erzeugt der Nocken die Bremskraft, indem dieser auf eine Führung einwirkt. Noch bevorzugter bewirkt die Nockenscheibe in ihrer Bremsstellung ein Verkeilen des Mitnehmers in seiner Führung.

Zur Erhöhung der Bremswirkung wirken die Bremsmittel mit einer Reibfläche zusammen. Reibfläche im Sinne der Erfindung meint eine gegenüber einer glatten Fläche so von der Oberflächenbeschaffenheit veränderte Oberfläche, dass ein demgegenüber erhöhter Haft-und/oder Gleitwiderstand zwischen dem Bremsmittel und der betreffenden Fläche hervorgerufen wird, beispielsweise durch Gestaltabweichungen von 1. bis 4. Ordnung.

Gemäß einer weiteren Ausgestaltung ist vorgesehen, dass die Stellung der Bremsmittel mittels eines optischen, magnetischen oder elektromechanischen Sensors detektiert wird. Das damit erzeugte Detektionssignal wird beispielsweise einer elektronischen Steuereinheit zugeführt. Beispielsweise erzeugt diese Steuereinheit ein Alarmsignal.

Die Erfindung betrifft ferner ein Personenbeförderungsfahrzeug, das die vorteilhafte, zuvor erwähnte Ein-/Ausstiegsvorrichtung aufweist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Fig. 1:: eine seitliche, schematische Ansicht der erfindungsgemäßen Ein-/Ausstiegsvorrichtung, wobei der Auszug 2 ungebremst ist;
- Fig. 2:: eine seitliche, schematische Ansicht der erfindungsgemäßen Ein-/Ausstiegsvorrichtung, wobei der Auszug 2 gebremst bzw. blockiert ist.

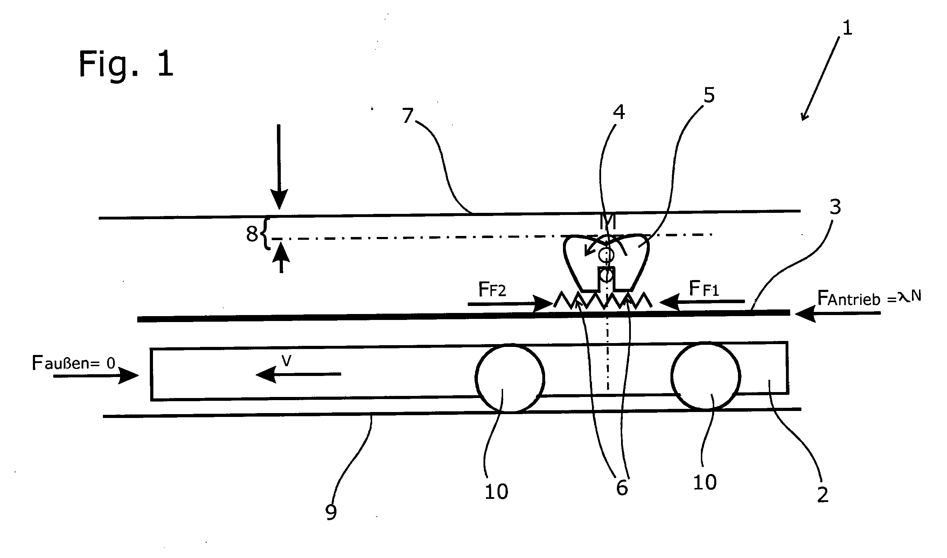

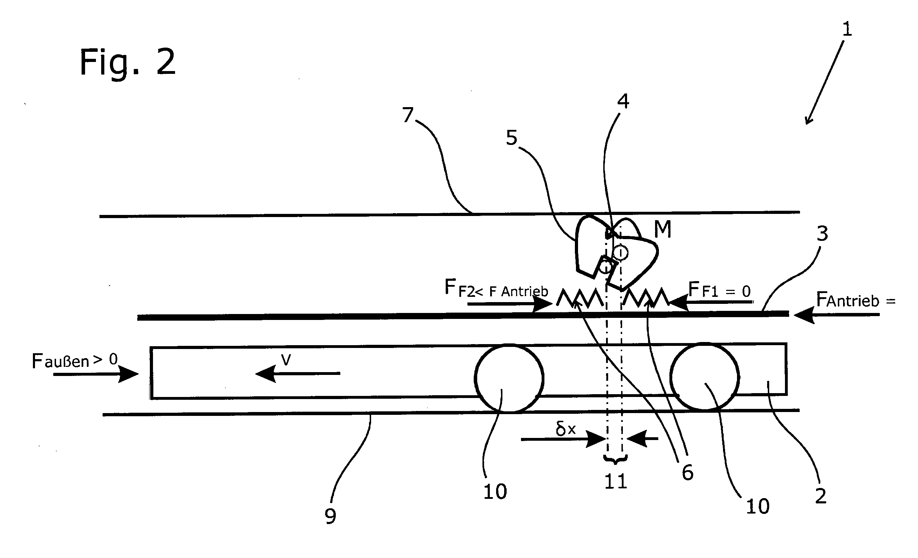

Die erfindungsgemäße Ein-Ausstiegsvorrichtung 1 umfasst einen Ausschub 2, d.h einen linear geführten Schiebetritt. Dieser Ausschub 2 ist an beiden zur Ausschubrichtung parallelen Seiten des Ausschubs 2 über die Rollen 10 in einer angedeuteten Führung 9 geführt, die ihrerseits an einem nicht dargestellten Fahrzeugrahmen befestigt ist. Der Antrieb des Ausschubs 2 erfolgt durch einen nicht dargestellten Motor und ein Zugmitteltrieb, der einen umlaufenden Zahnriemen 3 umfasst. An dem Zahnriemen 3 ist ein Mitnehmer 4 befestigt. Mittels des Mitnehmers 4 wird die Bewegung des Zahnriemens 3 auf den Ausschub 2 übertragen, um diesen zwischen seiner eingefahrenen Stellung und seiner ausgefahrenen Stellung hin- und herzubewegen. Es ist eine Relativbewegung zwischen dem Mitnehmer 4 und dem Ausschub 2 vorgesehen. Diese ist dadurch ermöglicht, dass der Mitnehmer in eine schwenkbeweglich am Auszug 2 gelagerte Nockenscheibe 5 eingreift. Deren Bewegung ist eingeschränkt und gibt dadurch den maximalen Verschiebeweg zwischen Ausschub 2 und Mitnehmer 4 vor. Es sind Federn 6 vorgesehen, um bei Fehlen einer äußeren Krafteinwirkung auf den Ausschub 2, wie es in Figur 1 gezeigt ist, die Nockenscheibe 5 in ihrer, in Figur 1 gezeigten Mittenstellung zu halten, beziehungsweise eine Rückstellung in diese Stellung zu bewirken. In dieser Mittenstellung der Nockenscheibe 5 bewirkt diese keine Bremswirkung. Bei Einwirken einer äußeren Kraft F_{außen}, wie es in Figur 2 gezeigt ist, kommt es zu einer Relativbewegung zwischen Mitnehmer 4 und Ausschub 2 um die Strecke 11. Dies bewirkt ein Verschwenken der Nockenscheibe 5, die mit einem ihrer Nocken einen Bremshub 8 zurücklegt und mit einem der äußeren Kraft F_{außen} entsprechenden Anpressdruck gegen eine Reibfläche 7 des Rahmens gedrückt wird. Es stellt sich eine Bremswirkung ein, die den Ausschub 2 in seiner Ausfahrbewegung bremst oder das Zurückschieben des Auszugs 2 entgegen der Ausfahrrichtung hemmt oder unterbindet. Aufgrund der beidseitigen Verschwenkbarkeit der Nockenscheibe 5 aus der Mittelstellung (gelöste Stellung) in die beiden Bremsstellungen ermöglicht sich auch bei umgekehrter äußerer Krafteinwirkrichtung eine Bremswirkung. Hierzu weist die vorliegende Nockenscheibe 5 zwei Nocken auf.

## Patentansprüche

1. Ein- /Ausstiegsvorrichtung (1) für ein Fahrzeug aufweisend: einen zwischen einer eingefahrenen und ausgefahrenen Stellung hin- und herbeweglichen Ausschub (2), einen angetriebenen Mitnehmer (4), der den Ausschub (2) mitnimmt, einen Motor und ein zugehöriges Getriebe (3), um den Mitnehmer (4) anzutreiben, Bremsmittel (5), um den Ausschub (2) wenigstens zu bremsen, **dadurch gekennzeichnet, dass** der Ausschub (2) relativ beweglich zu dem Mitnehmer (4) gelagert ist, und durch die Relativbewegung zwischen Ausschub (2) und Mitnehmer (4) die Bremsmittel (5) wenigstens aus ihrer Lösestellung in ihre Bremsstellung bewegt werden.

2. Ein-/Ausstiegsvorrichtung (1) gemäß Anspruch 1, **dadurch gekennzeichnet, dass** die Bremsmittel (5) durch eine Rückstellkraft (6) in ihre Lösestellung bewegt werden.

3. Ein-/Ausstiegsvorrichtung (1) gemäß dem vorhergehenden Ansprüche, **dadurch gekennzeichnet, dass** die Relativbewegung von Ausschub (2) und Mitnehmer (4) so ausgestaltet ist, dass eine mittlere Lösestellung und zwei, den beiden Bewegungsrichtungen der Relativbewegung entsprechende Bremsstellungen vorgesehen sind.

4. Ein-/Ausstiegsvorrichtung (1) gemäß einem der vorhergehenden Ansprüche, **dadurch gekennzeichnet, dass** das Getriebe (3) einen formschlüssigen oder kraftschlüssigen, bevorzugt formschlüssigen, Zugmitteltrieb aufweist.

5. Ein-/Ausstiegsvorrichtung (1) gemäß dem vorhergehenden Anspruch, **dadurch gekennzeichnet, dass** der Mitnehmer (4) an einem Riemen (3) des Zugmitteltriebs befestigt ist.

6. Ein-/Ausstiegsvorrichtung (1) gemäß einem der vorhergehenden Ansprüche, **dadurch gekennzeichnet, dass** die Bremsmittel (5) eine am Ausschub (2) verschwenkbar gelagerte Nockenscheibe umfassen, die mit dem Mitnehmer (4) zur Erzeugung einer Bremskraft zusammenwirkt.

7. Ein-/Ausstiegsvorrichtung (1) gemäß einem der vorhergehenden Ansprüche, **dadurch gekennzeichnet, dass** der Motor ein Elektromotor, ein hydraulischer oder pneumatischer Motor ist.

8. Ein-/Ausstiegsvorrichtung (1) gemäß einem der vorhergehenden Ansprüche, **dadurch gekennzeichnet**, das die Bremsmittel (5) mit einer Reibfläche (7) zusammenwirken.

9. Ein-/Ausstiegsvorrichtung (1) gemäß einem der vorhergehenden Ansprüche, **dadurch gekennzeichnet, dass** der Ausschub (2) linear verschiebbar gelagert ist.

10. Ein-/Ausstiegsvorrichtung (1) gemäß einem der vorhergehenden Ansprüche, **dadurch gekennzeichnet, dass** die Stellung der Bremsmittel (5) mittels eines optischen, magnetischen oder elektromechanischen Sensors detektiert wird.

11. Personenbeförderungsfahrzeug **gekennzeichnet durch** eine Ein-/Ausstiegsvorrichtung (1) gemäß einem der vorhergehenden Ansprüche.

## Claims

1. An embarking/disembarking device (1) for a vehicle, comprising: an extension (2) that can be moved back and forth between a retracted and an extended position, a driven carrier (4) that carries along the extension (2), a motor and an associated gearing (3) for driving the carrier (4), braking means (5) for at least braking the extension (2), **characterised in that** the extension (2) is mounted in a movable manner relative to the carrier (4), and the braking means (5) are moved at least from their release position to their braking position by means of the relative movement between the extension (2) and the carrier (4).

2. The embarking/disembarking device (1) according to claim 1, **characterised in that** the braking means (5) are moved into their release position by means of a restoring force (6).

3. The embarking/disembarking device (1) according to the preceding claims, **characterised in that** the relative movement of the extension (2) and the carrier (4) is configured in such a manner that a central release position and two braking positions corresponding to the two movement directions of the relative movement are provided.

4. The embarking/disembarking device (1) according to any one of the preceding claims, **characterised in that** the gearing mechanism (3) has a positive or non-positive, preferably positive, traction mechanism drive.

5. The embarking/disembarking device (1) according to the preceding claim, **characterised in that** the carrier (4) is attached to a belt (3) of the traction mechanism drive.

6. The embarking/disembarking device (1) according to any one of the preceding claims, **characterised in that** the braking means (5) comprise a cam disc which is pivotably mounted on the extension (2) and cooperates with the carrier (4) to generate a braking force.

7. The embarking/disembarking device (1) according to any one of the preceding claims, **characterised in that** the motor is an electric motor, a hydraulic motor or a pneumatic motor.

8. The embarking/disembarking device (1) according to any one of the preceding claims, **characterised in that** the braking means (5) cooperate with a friction surface (7).

9. The embarking/disembarking device (1) according to any one of the preceding claims, **characterised in that** the extension (2) is mounted in a linearly displaceable manner.

10. The embarking/disembarking device (1) according to any one of the preceding claims, **characterised in that** the position of the braking means (5) is detected by means of an optical, magnetic or electromechanical sensor.

11. Passenger transport vehicle, **characterised by** an embarking/disembarking device (1) according to any one of the preceding claims.

## Revendications

1. Dispositif d'accès/de descente (1) pour un véhicule, présentant : un élément télescopique (2) apte à être animé d'un mouvement de va-et-vient entre une position rentrée et une position sortie, un entraîneur (4) actionné qui entraîne ledit élément télescopique (2), un moteur et un engrenage (3) associé afin d'actionner ledit entraîneur (4), des moyens de freinage (5) afin d'au moins freiner ledit élément télescopique (2), **caractérisé par le fait que** ledit élément télescopique (2) est logé de manière à être déplaçable relativement à l'entraîneur (4) et que, par le mouvement relatif entre ledit élément télescopique (2) et ledit entraîneur (4), les moyens de freinage (5) sont déplacés au moins depuis leur position de desserrage dans leur position de freinage.

2. Dispositif d'accès/de descente (1) selon la revendication 1, **caractérisé par le fait que** lesdits moyens de freinage (5) sont déplacés dans leur position de desserrage par une force de rappel (6).

3. Dispositif d'accès/de descente (1) selon les revendications précédentes, **caractérisé par le fait que** le mouvement relatif de l'élément télescopique (2) et de l'entraîneur (4) est conçu de telle manière qu'une position médiane de desserrage et deux positions de freinage correspondant aux deux directions de mouvement du mouvement relatif sont prévues.

4. Dispositif d'accès/de descente (1) selon l'une quelconque des revendications précédentes, **caractérisé par le fait que** ledit engrenage (3) présente une commande par moyen de traction à engagement positif ou par liaison de force, de préférence à engagement positif.

5. Dispositif d'accès/de descente (1) selon la revendication précédente, **caractérisé par le fait que** ledit entraîneur (4) est fixé sur une courroie (3) de la commande par moyen de traction.

6. Dispositif d'accès/de descente (1) selon l'une quelconque des revendications précédentes, **caractérisé par le fait que** les moyens de freinage (5) comprennent un disque à cames qui est logé à pivotement sur ledit élément télescopique (2) et qui agit de concert avec ledit entraîneur (4) pour générer une force de freinage.

7. Dispositif d'accès/de descente (1) selon l'une quelconque des revendications précédentes, **caractérisé par le fait que** ledit moteur est un moteur électrique, un moteur hydraulique ou pneumatique.

8. Dispositif d'accès/de descente (1) selon l'une quelconque des revendications précédentes, **caractérisé par le fait que** lesdits moyens de freinage (5) agissent de concert avec une surface de friction (7).

9. Dispositif d'accès/de descente (1) selon l'une quelconque des revendications précédentes, **caractérisé par le fait que** ledit élément télescopique (2) est logé de manière à être déplaçable linéairement.

10. Dispositif d'accès/de descente (1) selon l'une quelconque des revendications précédentes, **caractérisé par le fait que** la position des moyens de freinage (5) est détectée au moyen d'un capteur optique, magnétique ou électromécanique.

11. Véhicule de transport de personnes, **caractérisé par** un dispositif d'accès/de descente (1) selon l'une quelconque des revendications précédentes.
